# EUROPÄISCHE PATENTSCHRIFT

(11) **EP 3 859 920 B1**
(45) Veröffentlichungstag und Bekanntmachung des Hinweises auf die Patenterteilung: **13.08.2025**
(21) Anmeldenummer: 21154102.4
(22) Anmeldetag: 28.01.2021
(51) Int. Cl.: H02G 3/20, F21S 8/02, F21V 15/02, F21V 21/04, F21V 25/00

(54) **ABSTANDHALTER**
SPACER
ESPACEUR

(30) Priorität: 31.01.2020 DE 102020102520
(43) Veröffentlichungstag der Anmeldung: 04.08.2021
(73) Patentinhaber: Kaiser GmbH & Co. KG, 58579 Schalksmühle (DE)
(72) Erfinder: SIEBEKING, Thomas, 58513 Lüdenscheid (DE)
(74) Vertreter: Rentsch Partner AG

(56) Entgegenhaltungen:
- EP-B1- 2 541 125
- CA-A1- 2 692 454
- DE-C2- 19 937 617
- GB-A- 2 405 440

## Beschreibung

Die Erfindung betrifft einen Abstandhalter zur Anordnung zwischen einer Hohlwand und einer Isolation über einem elektrischen Verbraucher, insbesondere einer Einbauleuchte, hinter einer Einbauöffnung der Hohlwand.

Aus dem Stand der Technik sind Abstandhalter bekannt, welche einen Aufnahmeraum für einen elektrischen Verbraucher zur Verfügung stellen und den darin angeordneten elektrischen Verbraucher u. a. vor in der Hohlwand angeordnetem Isolationsmaterial schützen. Das Isolationsmaterial kann einerseits rückseitig auf den elektrischen Verbraucher drücken und andererseits die Funktionsfähigkeit des elektrischen Verbrauchers beeinträchtigen. Beispielsweise kann zu eng an dem elektrischen Verbraucher anliegendes Isolationsmaterial zu einem Hitzestau in dem Verbraucher führen.

Die DE102013112303, veröffentlicht 2015 im Namen derselben Anmelderin, zeigt beispielsweise einen Abstandhalter, welcher aus mehreren, einen kuppelartigen Käfig bildenden federelastischen Armen besteht, die an einem Endbereich zusammengeführt und miteinander verbunden sind. Die Arme sind in einer Montagelage gegen ihre Federkraft zusammendrückbar, sodass der Abstandhalter samt Arme durch die Einbauöffnung steckbar ist, und in der Endmontagelage aufgefedert sind, sodass die freien Enden der Arme hinter der Einbauöffnung sich an der die Einbauöffnung aufweisenden Fläche abstützen und/oder mit Bestandteilen an der Lochleibung angreifen.

Die EP2031723, veröffentlicht 2009 im Namen der Elprothom GmbH and Co KG, zeigt zudem einen Abstandhalter mit zwei Armen, welche von einem Rückenschild in eine gleiche Richtung abstehen. Von jedem Arm steht wenigstens eine Auflagefläche radial nach aussen ab. Jeder Arm weist wenigstens eine Sollbruchstelle und einen radial nach aussen gerichteten Dorn auf. Dies erlaubt es, die betreffenden Bereiche der Arme deutlich länger zu machen als die Stärke einer Platte, an der der Abstandhalter montiert werden soll, sodass ein Benutzer die Enden der Arme während des Platzierens des Abstandhalters in der Hand behalten und führen kann. Die Sollbruchstellen dienen dazu die nach dem Platzieren des Abstandhalters über die Aussenseite der Platte überstehenden Enden der Arme zu entfernen.

Die EP2620701, veröffentlicht 2013 im Namen der Hellermanntyton, offenbart einen Abstandhalter zur Installation in einer Decke umfassend eine Vielzahl von zueinander gelenkig gelagerten Armen, sodass die Arme aus einer Vorabdeckungsposition in eine Lampenabdeckungsposition gedreht werden können. Weiterhin offenbart die EP2546564, ebenfalls veröffentlicht 2013 im Namen der Hellermanntyton, einen Abstandhalter für eine Deckenlampe, die eine Vielzahl von Armen sowie Einklinkmittel zum Befestigen mindestens eines der Arme am Rest des Abstandhalters umfasst. Die Ausgestaltung der Befestigung dieser Abstandhalter soll eine einfache Lagerung und Transport des unverbauten Abstandhalters erlauben.

Ein Nachteil dieser aus dem Stand der Technik bekannten Abstandhalter ist die mangelnde Flexibilität der Anwendung für unterschiedlich grosse elektrische Verbraucher, bzw. Einbauleuchten. Ein weiterer Nachteil der aus dem Stand der Technik bekannten Abstandhalter ist die mangelnde Eigenstabilität des Abstandhalters bei Belastung, welche oftmals eine Montage an und in der Einbauöffnung nötig macht.

EP 2 541 125 B1 offenbart einen Abstandshalter gemäß dem Oberbegriff des Anspruchs 1.

Eine Aufgabe der Erfindung besteht darin einen Abstandhalter bereitzustellen, welcher für verschiedene Anwendungen, wie unterschiedliche elektrische Verbraucher, Platzgegebenheiten, oder Einbauöffnungen verwendbar ist. Die Erfindung wird durch einen Abstandhalter gemäß Anspruch 1 definiert. Weitere bevorzugte Ausführungsformen sind in den abhängigen Ansprüchen definiert.

In einer bevorzugten Variante der Erfindung umfasst der Abstandhalter mehrere Arme, welche einen Aufnahmeraum zur Aufnahme eines elektrischen Verbrauchers, insbesondere einer Einbauleuchte, einfassen. Die Arme sind mit Vorteil um eine Mittelachse des Abstandhalters angeordnet. Die Mittelachse steht hierbei in einem nicht deformierten Zustand des Abstandhalters senkrecht zu einer Auflagefläche zur Auflage des Abstandhalters an der Hohlwand. Für die Auflage an der Hohlwand kann der Abstandhalter mindestens einen Auflagefuss aufweisen. Mit Vorteil umfasst der Abstandhalter jedoch einen Auflagefuss pro Arm. Die Arme sind an ihrem rückseitigen Ende miteinander über mindestens einen deformierbaren Gelenkbereich wirkverbunden. Während der Montage, insbesondere beim Durchstecken des Abstandhalters durch die Einbauöffnung der Hohlwand um diesen dahinter zu platzieren, kann der Abstandhalter in einen deformierten Zustand gebracht werden. Der deformierte Zustand ist in der Regel kein eigenstabiler Zustand. D.h. wenn keine Kraft mehr an dem Abstandhalter anliegt, kehrt der Abstandhalter in seine Ausgangslage (den nicht deformierten Zustand) zurück. In dem deformierten Zustand ist der mindestens eine deformierbare Gelenkbereich, sowie allenfalls weitere Bereiche, elastisch deformiert. In diesem deformierten Zustand ist der Abstandhalter durch die Einbauöffnung in die Hohlwand einführbar. In dem deformierten Zustand können die Arme um den mindestens einen deformierbaren Gelenkbereich (elastisch) in Richtung der Mittelachse ausgelenkt sein. In diesem deformierten Zustand können die Arme mit den allenfalls daran angeordneten Auflagefüssen entsprechend zueinander hin gekippt sein. In dem deformierten Zustand ist der Abstandhalter in Richtung der Mittelachse mit Vorteil innerhalb einer ersten Kreiskontur mit dem Durchmesser D1 angeordnet. Der Durchmesser D1 ist in der Regel kleiner als ein Durchmesser der Einbauöffnung. In einem nicht deformierten Zustand sind die den rückseitigen Enden gegenüberliegenden vorderseitigen Enden der Arme und/oder die Auflagefüsse mit Vorteil jedoch ausserhalb der ersten Kreiskontur angeordnet. So können die Arme und/oder die Auflagefüsse an einer Rückseite der Hohlwand einfach neben der Einbauöffnung abgestützt werden. Der deformierbare Gelenkbereich ist mit Vorteil in Richtung der Mittelachse innerhalb einer zweiten Kreiskontur mit dem Durchmesser D2 angeordnet. Der Durchmesser D2 ist hierbei keiner als der Durchmesser D1. Der deformierbare Gelenkbereich kann beispielsweise ringförmig, insbesondere ringförmig um die Mittelachse, angeordnet sein. Der deformierbare Gelenkbereich kann ebenfalls mindestens eine Materialverdünnung aufweisen. Alternativ oder ergänzend kann der deformierbare Gelenkbereich ein Schnappscharnier oder eine andersartig umstülpbare Struktur umfassen. D.h. je nach Ausgestaltung kann der deformierbare Gelenkbereich zwei stabile Positionen haben.

Je nach Ausgestaltung des Abstandhalters kann dieser einen rückseitigen Boden umfassen. In einer montierten Position kann dieser gegenüberliegend der Einbauöffnung angeordnet sein. Der Boden kann tellerförmig und/oder gewölbt ausgebildet sein. Mit Vorteil steht die Mittelachse mittig auf dem Boden. Der Boden ist hierbei mit Vorteil im Wesentlichen senkrecht zur Mittelachse ausgerichtet. Es können auch mehrere deformierbare Gelenkbereiche vorhanden sein, welche jeweils über den Boden (oder einen anderen Teil des Abstandhalters) miteinander wirkverbunden sind. Der mindestens eine deformierbare Gelenkbereich kann jedoch alternativ oder ergänzend auch zumindest bereichsweise im Boden angeordnet sein. Der ringförmige deformierbare Gelenkbereich kann z.B. ein äusserer ringförmiger Bereich des Bodens sein. Des Weiteren kann der mindestens eine deformierbare Gelenkbereich zudem mehrere Einkerbungen umfassen. Die Einkerbungen können die Deformation positiv beeinflussen. Die Einkerbungen können zum Beispiel am Boden zwischen den Armen in Richtung der Mittelachse angeordnet sein.

Vorteilhafterweise sind die Arme nicht oder nur wenig von der Deformation betroffen. Steifer ausgestaltete Arme verbessern die Eigenstabilität des Aufnahmeraums unter Last, wie beispielsweise bei einer rückseitigen Belastung durch Isolationsmaterial auf den Abstandhalter. Die Steifheit der Arme kann weiter begünstigt werden, indem die Arme mindestens eine Versteifungsrippe und/oder Sicke aufweisen. Diese können z.B. entlang der Längsrichtung des jeweiligen Arms angeordnet sein. Für eine stabile Auflage und Positionierung hinter der Einbauöffnung kann es vorteilhaft sein, wenn der Abstandhalter drei oder vier gleichmässig um die Mittelachse verteilt angeordnete Arme aufweist. Die Arme können in einen rückseitigen Übergangsbereich und einen daran anschliessenden vorderseitigen, insbesondere verkürzbaren Bereich unterteilt werden. Der vorderseitige Bereich der Arme kann sich im Wesentlichen in Richtung der Mittelachse erstrecken. Mit Vorzug erstreckt sich der Arm im vorderseitigen Bereich jedoch leicht winkelig von der Mittelachse weg. D.h. der Querschnitt des Aufnahmeraums (normal zur Mittelachse) wird vom Boden zur Auflagefläche grösser. Dies hat den Vorteil, dass sich der Abstandhalter unter Last besser an der Hohlwand abstützen kann. Für eine gute Kraftübertragung entlang der Arme kann der Übergangsbereich jeweils winkelig zu dem vorderseitigen Bereich und dem Boden ausgerichtet sein.

Gemäss der Erfindung sind die Arm in ihrer Länge verkürzbar. In ihrer Länge jeweils verkürzbare Arme erlauben einen anpassbaren Abstandhalter, respektive anpassbaren Aufnahmeraum. Auf diese Weise kann der Aufnahmeraum in seinem Volumen verkleinert werden. Dies ermöglicht einen platzsparenden Einbau und/oder eine individuelle Anpassung des Aufnahmeraums an die jeweilige benötigte Grösse des zu montierenden elektrischen Verbrauchers. Mit Vorteil ist hierbei der vorderseitige Bereich der Arme verkürzbar. Dies kann realisiert werden, indem die jeweiligen Arme entlang mindestens einer Trennstelle durchtrennbar ausgestaltet sind, sodass in einem durchtrennten Zustand des Arms ein verkürztes Ende des Arms gebildet wird, welches über das rückseitige Ende an dem mindestens einen deformierbaren Gelenkbereich angebracht ist. Die mindestens eine Trennstelle ist hierbei mit Vorteil in dem vorderseitigen Bereich (hier auch verkürzbarer Bereich) der Arme angeordnet. Die mindestens eine Trennstelle kann eine Dünnstelle des Armes sein. Die mindestens eine Trennstelle kann jedoch zusätzliche Verbindungsstege aufweisen, welche sich an mindestens einer Stelle über die Trennstelle erstrecken können. Je nach Ausgestaltung der Trennstelle kann diese von Hand und/oder von einem dazu vorgesehenen Werkzeug durchtrennt werden.

Für die Auflage und Abstützung an der Hohlwand, insbesondere an einer rückseitigen Oberfläche der Hohlwand, kann der Abstandhalter mindestens einen Auflagefuss aufweisen. Mit Vorteil umfasst der Abstandhalter jedoch einen Auflagefuss pro Arm. Der Auflagefuss kann in einem montierten Zustand des Abstandhalters in der Hohlwand an einer Oberfläche der Hohlwand anliegen. Eine steife Ausgestaltung der Arme hat den Vorteil, dass diese nicht in der Einbauöffnung fixiert werden müssen, wie es von Abstandhaltern aus dem Stand der Technik bekannt ist. Die Arme können vielmehr über die rückseitig an einer Oberfläche der Hohlwand und neben der Einbauöffnung angeordneten Auflagefüsse abgestützt werden. D.h., dass der Abstandhalter mit Vorteil in dem nicht deformierten Zustand (und insbesondere in dem montierten Zustand) eigenstabil ist. Auf diese Weise verbleibt die Einbauöffnung frei, was den nachträglichen Einbau des elektrischen Verbrauchers durch diese erleichtern kann. Je nach Ausgestaltung kann der Auflagefuss separat ausgestaltet sein und mit dem jeweiligen (ungekürzten) vorderseitigen Ende oder dem gekürzten Ende des Arms wirkverbindbar sein. Alternativ ist es jedoch ebenfalls möglich, dass die Arme in dem ungekürzten Zustand an dem Auflagefuss angeformt sind. Wenn lediglich eine Trennstelle pro Arm vorhanden ist, bildet sich im durchtrennten Zustand der einen Trennstelle ein verkürztes Ende des Arms, welches an dem mindestens einen Gelenkbereich angebunden ist, sowie ein freies Ende angeordnet an dem Auflagefuss. Das freie Ende beeinflusst jedoch mit Vorteil nicht die Wirkverbindung des Auflagefusses mit dem verkürzten Ende des Arms. In einem wirkverbundenen Zustand kann sich vielmehr das freie Ende und das verkürzte Ende nebeneinander erstrecken. Bei lediglich einer Trennstelle kann der Arm auf zwei unterschiedliche Längen einstellbar sein. Die jeweilige Höhe des Abstandhalters wird hierbei definiert durch den Abstand der ersten Trennstelle zum Auflagefuss.

Mit Vorteil weisen die Arme jedoch jeweils mindestens zwei Trennstellen auf. Bei mehreren Trennstellen kann zwischen zwei Trennstellen ein abtrennbarer Bereich des Arms entfernt werden. Dieser kann bei multiplen Trennstellen individuell in seiner Länge angepasst werden. Je nach Ausgestaltung kann eine der mindestens zwei Trennstellen im Bereich des vorderseitigen Endes des Arms angeordnet sein. Mit Vorteil ist eine der mindestens zwei Trennstellen in Richtung der Mittelachse auf Höhe des Auflagefusses angeordnet. Ebenfalls denkbar ist, dass eine Trennstelle zwischen dem Auflagefuss und dem Arm angeordnet ist. Jedoch können grundsätzlich zwei beliebige Trennstellen für die Verkürzung gewählt werden. Mit Vorzug ist an mindestens einem der Arme eine Längenskala entlang der Längsrichtung des Arms vorhanden um das Abtrennen auf eine bestimmte Höhe des Abstandhalters zu erleichtern.

Je nach Ausgestaltung kann der Auflagefuss ein Aufnahmeelement und ggf. ebenfalls ein Auflageelement umfassen. Das Aufnahmeelement des Auflagefusses kann zur Aufnahme des verkürzten Endes des Arms dienen. Das Aufnahmeelement kann z.B. eine Vertiefung sein, in welche das verkürzte Ende einsteckbar ist. Die Vertiefung kann von einer Wandung umgeben sein. Ebenfalls denkbar ist z.B. eine röhrenförmige oder klammerförmige Ausgestaltung des Aufnahmeelements zum zumindest bereichsweise Umgreifen des Arms. Für eine stabile Auflage an der Hohlwand können die jeweiligen Auflagefüsse ergänzend ein Auflageelement umfassen. Mit Vorteil erstreckt sich das mindestens eine Auflageelement dünnwandig entlang der Auflagefläche zur Auflage an der Hohlwand. Hierbei kann das Auflageelement zwei abstehende, mit Vorteil ebenfalls dünnwandige, Flügel umfassen. Die Flügel können zur Befestigung des Abstandhalters dienen. Beispielsweise können die Flügel von Bügeln eines eingebauten elektrischen Verbrauches, insbesondere einer Einbauleuchte, festgeklemmt werden und so den Abstandhalter an der Einbauöffnung positionieren. Ein Bügel kann sich im montierten Zustand zwischen zwei Armen erstrecken und je einen Flügel dieser Arme festklemmen. Die Auflagefläche des jeweiligen Auflageelements kann sichelförmig ausgestaltet sein. Die Auflagefläche kann sich z.B. über die beiden Flügel sowie eine Rückseite des Aufnahmeelementes erstrecken. Die sichelförmigen Auflageflächen können hierbei zu der Mittelachse des Abstandhalters hingewandt ausgerichtet sein. Die Mittelachse steht zudem mit Vorteil im montierten Zustand des Abstandhalters an der Hohlwand im Wesentlichen mittig zur Einbauöffnung in der Hohlwand. Kleinere Verschiebungen von der Mittelachse des Abstandhalters zu der Mittelachse der Einbauöffnung sind jedoch grundsätzlich möglich. Auf dem Auflageelement kann das Aufnahmeelement angeordnet sein. Beispielsweise kann die Wandung des Aufnahmeelementes von dem Auflageelement abragen.

Je nach Anwendung, können die Arme an ihrem verkürzten Ende jeweils ein Rastelement aufweisen. Das Rastelement dient dazu in einem montierten Zustand des verkürzten Endes des Arms in dem Aufnahmeelement einen Hinterschnitt mit dem Auflagefuss zu bilden. Bei mehreren möglichen Trennstellen, respektive verkürzten Enden, können mehrere Rastelemente entlang des Arms angeordnet sein. Für das (mindestens eine) Rastelement kann in dem Aufnahmeelement eine Aussparung vorgesehen sein, welche das Rastelement in einem montierten Zustand aufnimmt und einen Hinterschnitt mit diesem bildet. Alternativ oder ergänzend kann in dem Aufnahmeelement mindestens ein Klemmmittel angeordnet sein, welches in einem montierten Zustand das verkürzte Ende des Arms in dem Aufnahmeelement festklemmt. Das Klemmelement kann eine Rippe entlang einer Innenseite der Wandung sein. Die Rippe erstreckt sich mit Vorteil in die gleiche Richtung wie die Wandung. Mit Vorteil sind die Klemmelemente in dem Aufnahmeelement, respektive in der Vertiefung, paarweise gegenüberliegend angeordnet.

Je nach Anwendung kann der Abstandhalter mindestens eine Halteklammer zum Halten und ggf. Zugentlasten von einem Kabel in einem Haltebereich umfassen. Das Kabel kann in den Haltebereich über eine seitliche Kabeleinführöffnung eingeführt werden. Die Halteklammer kann z.B. spiral- oder C- förmig ausgestaltet sein. Je nach Anwendung kann die Halteklamme zumindest bereichsweise elastisch deformierbar sein. Mit Vorteil weist die mindestens eine Halteklammer einen Lasche auf. Durch Auslenken der Lasche, z.B. durch Draufdrücken mit einem Finger in Richtung der Mittelachse, führt die aufgebrachte Kraft zu einer (elastischen) Deformation der Halterklammer. In einem deformierten Zustand der mindestens einen Halteklammer ist hierbei die Kabeleinführöffnung in den Haltebereich des Kabels vergrössert. Dies vereinfacht die Montage der Kabel. Mit Vorteil ist die mindestens eine Halteklammer zwischen zwei rückseitigen Enden zweier Arme angeordnet. Die mindestens eine Halteklammer kann an einem Arm und/oder an dem Boden angeformt sein. Mit Vorteil ist die mindestens eine Halteklammer (in dem nicht deformierten Zustand) innerhalb einer rotationssymmetrischen Kontur der Arme um die Mittelachse angeordnet.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine Variante eines erfindungsgemässen Abstandhalters in einer perspektivischen Ansicht;
- Fig. 2: Der Abstandhalter gemäss Figur 1 in einer Ansicht von vorne;
- Fig. 3: Der Abstandhalter gemäss Figur 1 mit gekürzten Arm in einer perspektivischen Ansicht;
- Fig. 4: Der Auflagefuss des Abstandhalters gemäss Figur 3 in einer Ansicht von oben.

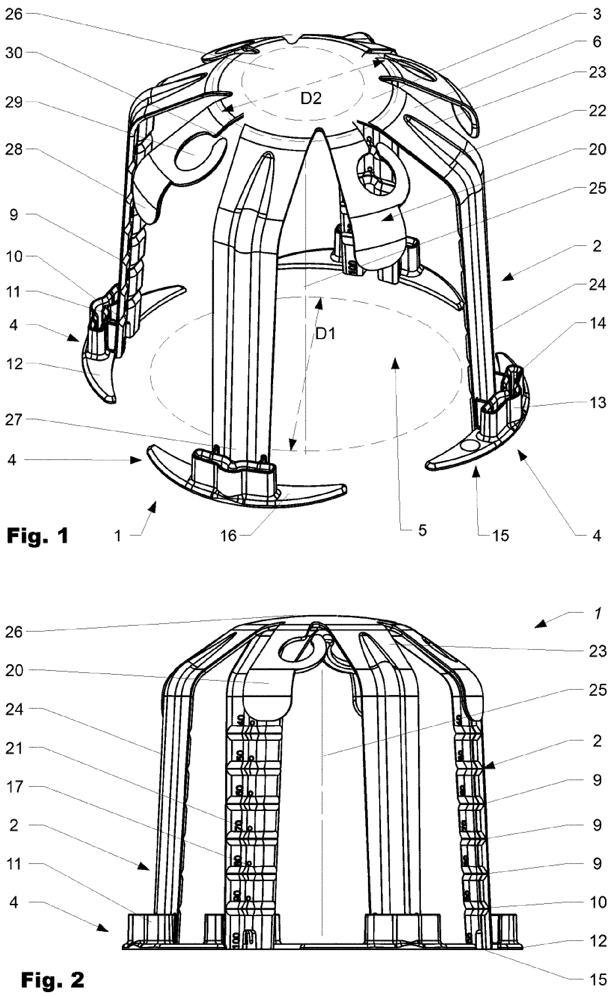

**Figur** 1 bis **Figur** 3 zeigen eine Variante eines erfindungsgemässen Abstandhalters 1. Die gezeigte Variante umfasst insgesamt vier Arme 2, welche an ihren rückseitigen Enden 6 über mindestens einen deformierbaren Gelenkbereich 3 wirkverbunden sind. Der mindestens eine Gelenkbereich 3 ist zumindest bereichsweise in einem Boden 26 des Abstandhalters 1 angeordnet. Im gezeigten Fall ist der deformierbare Gelenkbereich 3 ringförmig. Andere Ausgestaltungen sind jedoch ebenfalls möglich. Von dem mindestens einen deformierbaren Gelenkbereich 3 erstrecken sich die Arme 2 jeweils zu einem vorderseitigen Ende 27 der Arme 2. Ein Aufnahmeraum 5 zur Aufnahme eines elektrischen Verbrauchers wird von den Armen 2 eingefasst. Die Arme 2 können hierbei in einen abgeknickten Übergangsbereich 23 nahe des Gelenkbereichs 3 und einen daran anschliessenden im Wesentlichen geraden verkürzbaren Bereich 24 unterteilt werden. Für eine gute Stabilität der Arme 2 können diese entlang ihrer Längsrichtung eine Versteifungsrippe und/oder Sicke 22 aufweisen. In einem ungekürzten Zustand sind die Arme 2 jeweils mit Auflagefüssen 4 wirkverbunden, welche zur Auflage an der Hohlwand dienen. Zwischen den Armen 2 sind jeweils Halteklammern 20 zum Halten eines Kabels in einem Haltebereich 29 angeordnet sein. Das Kabel kann in den Haltebereich 29 über eine seitliche Kabeleinführöffnung 30 eingeführt werden. Durch Auslenken einer Lasche 28 deformiert sich die Halterklammer 20 und die Kabeleinführöffnung 30 wird vergrössert.

In **Figur 1** sind verschiedene Durchmesser D1, D2 ersichtlich. Diese Durchmesser beziehen sich auf einen (nicht gezeigten) deformierten Zustand bzw. den undeformierten Zustand (wie dargestellt). In dem deformierten Zustand ist der mindestens eine deformierbare Gelenkbereich 3 elastisch deformiert und die Arme 2 mit den Auflagefüssen 4 sind in Richtung der Mittelachse 25 geneigt. In dem deformierten Zustand ist der Abstandhalter 1 in Richtung der Mittelachse 25 mit Vorteil innerhalb einer ersten Kreiskontur mit dem Durchmesser D1 angeordnet. In einem nicht deformierten Zustand sind die Auflagefüsse 4 mit Vorteil jedoch ausserhalb der ersten Kreiskontur angeordnet. Der mindestens eine deformierbare Gelenkbereich 3 ist mit Vorteil (in dem deformierten und dem nicht deformierten Zustand) in Richtung der Mittelachse 25 innerhalb einer zweiten Kreiskontur mit dem Durchmesser D2 angeordnet. Der Durchmesser D1 ist hierbei grösser als D2.

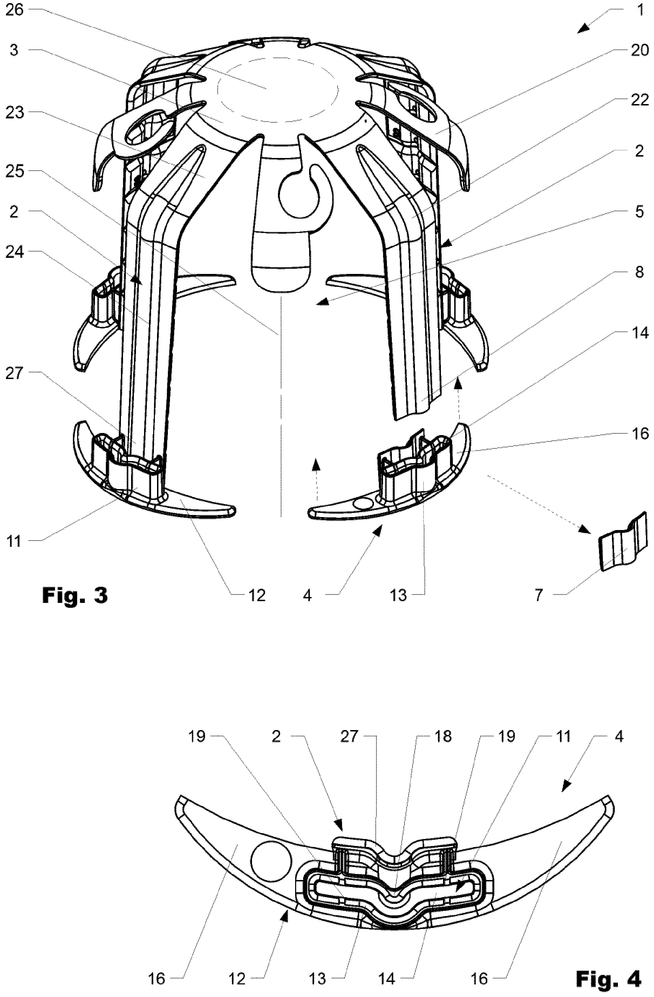

Die Arme 2 können in ihrer Länge verkürzt werden. Im vorliegenden Fall kann der verkürzbare Bereich 24 der Arme 2 ablängbar ausgestaltet sein. Hierfür kann in diesem Bereich mindestens eine (erste) Trennstelle 9 angeordnet sein. Im gezeigten Fall sind jedoch mehrere (erste) Trennstellen 9 in einem gleichmässigen Abstand entlang des Arms 2 angeordnet. Für eine schnelle und korrekte Ablängung ist zudem eine Längenskala 21 neben den Trennstellen 9 angeordnet (siehe **Figur 2****).** Eine (zweite) Trennstelle 10 ist auf Höhe des oberen Endes des Auflagefusses 4 angeordnet. Entlang einer ersten und der zweiten Trennstellen 9, 10 kann ein abtrennbarer Bereich 7 des Arms entfernt werden (siehe **Figur 3****).** Jedoch kann auch ein Bereich zwischen zwei anderen Trennstellen 9, 10, abgetrennt werden. Dadurch entsteht ein verkürztes (vorderseitiges) Ende 8 des Arms 2. Das verkürzte Ende 8 kann nun mit dem Auflagefuss 4 wirkverbunden werden. Nach dem Abtrennen kann das verkürzte Ende 8 mit einem Aufnahmeelement 11 des Auflagefusses 4 wirkverbunden werden. Im gezeigten Fall wird das verkürzte Ende 8 in eine Vertiefung 14 des Aufnahmeelementes 11 aufgenommen. Die Vertiefung 14 wird von einer Wandung 13 gebildet, welche von einem Auflageelement 12 absteht (siehe **Figur 4****).** Das Auflageelement 12 ist dünnwandig und umfasst eine Auflagefläche 15 zur Auflage an der Hohlwand. Das Auflageelement 12 umfasst je zwei dünnwandige Flügel 16, welche von dem Aufnahmeelement 11 abstehen. Die Flügel 16 bilden gemeinsam die Auflagefläche 15, welche im gezeigten Fall sichelförmig ist. Die Sichelform ist hierbei zu einer Mittelachse 25 des Abstandhalters 1 hingewandt. Die Mittelachse 25 steht zudem mit Vorteil im montierten Zustand des Abstandhalters 1 an der Hohlwand im Wesentlichen mittig zur Einbauöffnung in der Hohlwand. Kleinere Verschiebungen von der Mittelachse 25 des Abstandhalters 1 zu der Mittelachse der Einbauöffnung sind jedoch grundsätzlich möglich. Das Aufnahmeelement 11 ist vorteilhafterweise wie gezeigt mittig auf der Auflagefläche 15, respektive der sichelförmigen Auflagefläche 15, angeordnet. Für einen guten Halt des verkürzten Endes 8 des Arms 2 kann im Bereich des verkürzten Endes 8 neben der ersten Trennstelle 9 ein Rastelement 17 angeordnet sein (siehe **Figur 2****).** In einem montierten Zustand des verkürzten Endes 8 an dem Aufnahmeelement 11 verrastet dieses mit dem Aufnahmeelement 11. Im gezeigten Fall ist in der Wandung 13 eine Ausnehmung 18 vorgesehen, in welche das Rastelement 17 verrastet und einen Hinterschnitt bildet. Ergänzend sind in der Vertiefung 14 weitere Klemmmittel 19 angeordnet, welche zum Verklemmen des verkürzten Endes 8 des jeweiligen Arms 2 in dem Aufnahmeelement 11 dienen.

### LISTE DER BEZUGSZEICHEN

- 1: Abstandhalter
- 2: Arme
- 3: Gelenkbereich
- 4: Auflagefuss
- 5: Aufnahmeraum
- 6: Rückseitiges Ende
- 7: Abtrennbarer Bereich
- 8: Verkürztes Ende
- 9: Erste Trennstelle
- 10: Zweite Trennstelle
- 11: Aufnahmeelement
- 12: Auflageelement
- 13: Wandung
- 14: Vertiefung
- 15: Auflagefläche
- 16: Flügel
- 17: Rastelement
- 18: Ausnehmung
- 19: Klemmmittel
- 20: Halteklammer
- 21: Längenskala
- 22: Sicke
- 23: Übergangsbereich
- 24: Verkürzbarer Bereich
- 25: Mittelachse
- 26: Boden
- 27: Vorderseitiges Ende
- 28: Lasche
- 29: Haltebereich
- 30: Kabeleinführöffnung

## Patentansprüche

1. Abstandhalter (1) zur Anordnung zwischen einer Hohlwand und einer Isolation über einem elektrischen Verbraucher, insbesondere einer Einbauleuchte, hinter einer Einbauöffnung der Hohlwand, der Abstandhalter (1) umfassend
a. mehrere Arme (2) zur Abstützung gegenüber der Hohlwand, welche über ihre jeweiligen rückseitigen Enden (6) über mindestens einen deformierbaren Gelenkbereich (3) miteinander derart wirkverbunden sind, dass der Abstandhalter (1) in einem deformierten Zustand durch die Einbauöffnung in die Hohlwand einführbar ist;
b. einen von den Armen (2) eingefassten Aufnahmeraum (5) für den elektrischen Verbraucher;
**dadurch gekennzeichnet, dass**
c. die Arme (2) in ihrer Länge entlang mindestens einer Trennstelle (9, 10) verkürzbar sind, sodass der Aufnahmeraum in seinem Volumen verkleinerbar ist.

2. Abstandhalter (1) gemäss Patentanspruch 1, wobei der Abstandhalter (1) einen Auflagefuss (4) pro Arm (2) umfasst.

3. Abstandhalter (1) gemäss einem der vorangehenden Patentansprüche, wobei die Arme (2) bei der Deformation elastisch in Richtung einer Mittelachse (25) des Abstandhalters (1) auslenkbar sind.

4. Abstandhalter (1) gemäss einem der vorangehenden Patentansprüche, wobei die Arme (2) derart verkürzbar sind, sodass in einem verkürzten Zustand ein dem rückseitigen Ende (6) gegenüberliegendes verkürztes Ende (8) des Arms (2) gebildet wird.

5. Abstandhalter (1) gemäss Patentanspruch 2 und 4, wobei das verkürzte Ende (8) des Arms (2) mit dem jeweiligen Auflagefuss (4) wirkverbindbar ist.

6. Abstandhalter (1) gemäss Patentanspruch 5, wobei die Auflagefüsse (4) jeweils ein Aufnahmeelement (11) aufweisen, welches zur Aufnahme des verkürzten Endes (8) des Arms (2) dient.

7. Abstandhalter (1) gemäss Patentanspruch 6, wobei das verkürzte Ende (8) über ein Rastelement (17) in dem Aufnahmeelement (11) verrastbar ist.

8. Abstandhalter (1) gemäss Patentanspruch 6 oder 7, wobei in dem jeweiligen Aufnahmeelement (11) mindestens ein Klemmmittel (19) zum Verklemmen des verkürzten Endes (8) angeordnet ist.

9. Abstandhalter (1) gemäss Anspruch 2, wobei in einem ungekürzten Zustand die Arme (2) jeweils mit dem Auflagefuss (4) wirkverbunden sind.

10. Abstandhalter (1) gemäss Patentanspruch 2 oder 9, wobei die Auflagefüsse (4) je mindestens ein Auflageelement (12) zur Auflage an einer Oberfläche der Hohlwand umfassen.

11. Abstandhalter (1) gemäss Patentanspruch 10, wobei das Auflageelement (12) zwei bezüglich dem jeweiligen Arm (2) gegenüberliegende

12. Abstandhalter (1) gemäss einem der vorangehenden Patentansprüche, wobei der Abstandhalter (1) mindestens eine Halteklammer (20) zum Halten von einem Kabel umfasst.

13. Abstandhalter (1) gemäss einem der vorangehenden Patentansprüche, wobei mindestens einer der mehreren Arme (2) entlang seiner Längsrichtung eine Längenskala (21) aufweist.

14. Abstandhalter (1) gemäss einem der vorangehenden Patentansprüche, wobei die Arme (2) entlang ihrer Längsrichtung eine Versteifungsrippe und/oder Sicke (22) aufweisen.

## Claims

1. Spacer (1) for arrangement between a hollow wall and an insulation above an electrical load, in particular a built-in light, behind a mounting opening of the hollow wall, the spacer (1) comprising
a. a plurality of arms (2) for support against the hollow wall, which are interconnected via their respective rear side ends (6) via at least one deformable joint region (3) such that the spacer (1) is insertable through the mounting opening into the hollow wall in a deformed state;
b. a receiving space (5) for the electrical load enclosed by the arms (2), **characterized in that**
c. the arms (2) are shortenable in their length along at least one separating point (9, 10), such that the volume of the receiving space is reducible.

2. Spacer (1) according to patent claim 1, wherein the spacer (1) comprises a support foot (4) per arm (2).

3. Spacer (1) according to one of the preceding claims, wherein the arms (2) are elastically deflectable in the direction of a central axis (25) of the spacer (1) during deformation.

4. Spacer (1) according to one of the preceding patent claims, wherein the arms (2) are shortenable such that in a shortened state a shortened end (8) of the arm (2) opposite the rear side end (6) is formed.

5. Spacer (1) according to patent claims 2 and 4, wherein the shortened end (8) of the arm (2) is interconnectable with the respective support foot (4).

6. Spacer (1) according to patent claim 5, wherein the support feet (4) each have a receiving element (11) which is used for receiving the shortened end (8) of the arm (2).

7. Spacer (1) according to patent claim 6, wherein the shortened end (8) is latchable in the receiving element (11) via a latching element (17).

8. Spacer (1) according to patent claim 6 or 7, wherein at least one clamping means (19) for clamping the shortened end (8) is arranged in the respective receiving element (11).

9. Spacer (1) according to claim 2, wherein in an unshortened state the arms (2) are each interconnected with the support foot (4).

10. Spacer (1) according to claim 2 or 9, wherein the support feet (4) each comprise at least one support element (12) for support on a surface of the hollow wall.

11. Spacer (1) according to patent claim 10, **characterized in that** the support element (12) comprises two wings (16) opposite each other with respect to the respective arm (2).

12. Spacer (1) according to one of the preceding claims, wherein the spacer (1) comprises at least one retaining clip (20) for retaining a cable.

13. Spacer (1) according to one of the preceding patent claims, wherein at least one of the plurality of arms (2) has a length scale (21) along its longitudinal direction.

14. Spacer (1) according to one of the preceding patent claims, wherein the arms (2) have a stiffening rib and/or bead (22) along their longitudinal direction.

## Revendications

1. Espaceur (1) destiné à être disposé entre une cloison creuse et une isolation au-dessus d'un consommateur électrique, en particulier un luminaire encastré, derrière une ouverture de montage de la cloison creuse, l'espaceur (1) comprenant
a. plusieurs bras (2) destinés à s'appuyer contre la cloison creuse, qui sont reliés entre eux par leurs extremités arrière (6) respectives par au moins une zone d'articulation (3) déformable de telle sorte que l'espaceur (1) est introduisible dans un état déformé à travers l'ouverture de montage dans la cloison creuse,
b. un espace de réception (5) pour le consommateur électrique, encadré par les bras (2), **caractérisé en ce que**
c. les bras (2) sont raccourcissables dans leur longueur le long d'au moins un point de séparation (9, 10), de sorte que le volume de l'espace de réception est réductible.

2. Espaceur (1) selon l'une des revendications précédentes, dans lequel au moins l'un des plusieurs bras (2) présente une échelle de longueur (21) le long de sa direction longitudinale.

3. Espaceur (1) selon l'une des revendications précédentes, dans lequel les bras (2) présentent une nervure de renfort et/ou une moulure (22) le long de leur direction longitudinale.

4. Espaceur (1) selon l'une des revendications précédentes, dans lequel les bras (2) sont raccourcissables de telle sorte que, dans un état raccourci, une extrémité raccourcie (8) du bras (2) est formée en face de l'extrémité arrière (6).

5. Espaceur (1) selon les revendications 2 et 4, dans lequel l'extrémité raccourcie (8) du bras (2) est interconnectable avec le pied d'appui (4) correspondant.

6. Espaceur (1) selon la revendication 5, dans lequel les pieds d'appui (4) présentent chacun un élément de réception (11) qui sert à recevoir l'extrémité raccourcie (8) du bras (2).

7. Espaceur (1) selon la revendication 6, dans lequel l'extrémité raccourcie (8) est encliquetable dans l'élément de réception (11) par l'intermédiaire d'un élément d'encliquetage (17).

8. Espaceur (1) selon la revendication 6 ou 7, dans lequel au moins un moyen de serrage (19) est arrangé dans l'élément de réception (11) correspondant pour serrer l'extrémité raccourcie (8).

9. Espaceur (1) selon la revendication 2, dans lequel, à l'état non raccourci, les bras (2) sont chacun interconnectés avec le pied d'appui (4).

10. Espaceur (1) selon la revendication 2 ou 9, dans lequel les pieds d'appui (4) comprennent chacun au moins un élément d'appui (12) destiné à s'appuyer sur une surface de la cloison creuse.

11. Espaceur (1) selon la revendication 10, **caractérisé en ce que** l'élément d'appui (12) comprend deux ailes (16) opposées par rapport au bras (2) correspondant.

12. Espaceur (1) selon l'une des revendications précédentes, dans lequel l'espaceur (1) comprend au moins une pince de retenue (20) pour retenir un câble.

13. Espaceur (1) selon l'une des revendications précédentes, dans lequel au moins l'un des plusieurs bras (2) présente une échelle de longueur (21) le long de sa direction longitudinale.

14. Espaceur (1) selon l'une des revendications précédentes, dans lequel les bras (2) présentent une nervure de renfort et/ou une moulure (22) le long de leur direction longitudinale.
